# EUROPÄISCHE PATENTANMELDUNG

(11) **EP 2 230 061 A2**
(43) Veröffentlichungstag der Anmeldung: **22.09.2010**
(21) Anmeldenummer: 10003000.6
(22) Anmeldetag: 22.03.2010
(51) Int. Cl.: B29C 45/00, B29C 45/16, B29C 45/14, B29C 45/28, B29C 44/12, B29C 44/14

(54) **Verfahren zur Herstellung eines mehrlagigen Formteils**

(30) Priorität: 20.03.2009 CH 5452009
(71) Anmelder: Georg Kaufmann Formenbau AG, 5453 Busslingen (CH)
(72) Erfinder: Kaufmann, Georg, 5442 Fislisbach (CH)
(74) Vertreter: Burger, Hannes

(57) **Zusammenfassung**

Die Erfindung beschreibt ein Verfahren zur Herstellung eines mehrlagigen Formteils (2), insbesondere eines Verkleidungsteils für ein Kraftfahrzeug, bei dem zwischen einer Trägerschicht (6) und einer Dekorschicht (7) zumindest bereichsweise eine Zwischenschicht (8) ausgebildet wird. Dabei werden die Trägerschicht (6) und die Dekorschicht (7) in einem . Formhohlraum (5) eines Formwerkzeuges (1) angeordnet, wobei zumindest bereichsweise zwischen der Trägerschicht (6) und der Dekorschicht (7) zumindest ein Hohlraum (9) ausgebildet wird. Anschliessend wird im Hohlraum (9) die Zwischenschicht (8) ausgebildet.

## Beschreibung

Die Erfindung betrifft ein Verfahren zur Herstellung eines mehrlagigen Formteils, insbesondere eines Verkleidungsteils für ein Kraftfahrzeug, bei dem zwischen einer Trägerschicht und einer Dekorschicht zumindest bereichsweise eine Zwischenschicht ausgebildet wird.

Aus der EP 1 287 961 A2 ist ein Verkleidungsteil sowie in Verfahren und eine Vorrichtung zum Herstellen von mehrlagigen Verkleidungsteilen, insbesondere von Innenverkleidungsteilen für Kraftfahrzeuge, bekannt geworden. Dieser mehrlagige Verkleidungsteil weist mindestens eine Trageschicht, eine Dekorschicht und eine aus thermoplastischem Kunststoff bestehende Schaumstoffschicht auf, die partiell mindestens einen Bereich mit grösserer Weichheit und/oder Stoss - Absorbtionsfähigkeit bzw. Materialstärke aufweist. Diese Schaumstoffschicht geht allmählich mit mindestens einem Randteil in das Niveau der eine gleichmässige Dicke aufweisenden Schaumstoffschicht über. Dabei wird zur Bildung des Bereiches mit grösserer Materialstärke zunächst ein aus thermoplastischem Kunststoff bestehender Rohling eines Schaumstoffzuschnittes zusätzlich auf der zwischen der Dekor- und Trageschicht angeordneten Schaumstoffschicht fixiert und anschliessend durch Druck und Wärme zum Verformen der Teile umgeformt. Dabei wird der Rohling bzw. der daraus gebildete Schaumstoffzuschnitt mit mindestens einem allmählich auslaufenden Randteil ausgebildet und gleichzeitig thermoplastisch mit der Schaumstoffschicht und der Trageschicht verbunden. Dieser Umform- sowie Verbindungsvorgang wird mit Hilfe der Wäre der zuvor erwärmten Tragschicht durchgeführt.

Der vorliegenden Erfindung liegt die Aufgabe zugrunde, ein Verfahren zur Herstellung eines mehrlagigen Formteils mit einer zwischen einer Trägerschicht und einer Dekorschicht zumindest bereichsweise angeordneten Zwischenschicht anzugeben, bei dem die Zwischenschicht einfach und kostengünstig ausgebildet werden kann.

Diese Aufgabe der Erfindung wird dadurch gelöst, dass die Trägerschicht und die Dekorschicht in einem Formhohlraum eines Formwerkzeuges angeordnet und gehalten werden, wobei zumindest bereichsweise zwischen der Trägerschicht und der Dekorschicht ein Hohlraum ausgebildet wird und anschliessend im Hohlraum die Zwischenschicht ausgebildet wird.

Der sich durch die Vorgehensweise nach Anspruch 1 ergebende Vorteil liegt darin, dass dadurch die Möglichkeit geschaffen wird in eigenen Arbeitsgängen sowohl die Dekorschicht als auch die Trägerschicht jeweils in ihrer gewünschten Formgebung festlegen zu können und erst anschliessend daran an den dafür vorbestimmten Stellen bzw. Positionen die Zwischenschicht in der vorgesehenen Dicke und Härte auszubilden. Durch die Anordnung der Trägerschicht sowie der Dekorschicht innerhalb des Formhohlraums kann zwischen diesen beiden Schichten an den dafür vorgesehenen Positionen ein entsprechender Hohlraum ausgebildet werden, welcher zur Aufnahme der auszubildenden Zwischenschicht dient. Dadurch, dass die Trägerschicht und die Dekorschicht zumeist vollflächig die Formwände des Formhohlraums abdecken, kommt der Werkstoff zur Ausbildung der Zwischenschicht während seines Herstellvorganges nicht mehr oder nur mehr bereichsweise in Berührung mit den Formwänden, da die Ausbildung innerhalb des oder der Hohlräume zwischen den beiden Schichten erfolgt.

Vorteilhaft ist bei den gewählten Verfahrensschritten nach Anspruch 2, dass dadurch in einem unabhängigen Arbeitsvorgang die zumeist stabile Trägerschicht einfach und kostengünstig in ihrer Form festgelegt und ausgebildet werden kann.

Weiters ist ein Vorgehen gemäss den im Anspruch 3 angegebenen Merkmalen vorteilhaft, weil dadurch die Möglichkeit geschaffen wird, die hergestellte Trägerschicht an einer der Formhälften zu belassen und mittels der weiteren Düse in einem späteren Arbeitsgang den Werkstoff zur Bildung der Zwischenschicht in den Hohlraum zwischen der Trägerschicht und der Dekorschicht einbringen zu können.

Eine weitere vorteilhafte Vorgehensweise ist im Anspruch 4 beschrieben, wodurch im Bereich der Düsenseite komplizierte Verschlussmechanismen für die Angussöffnung während der Ausbildung der Trägerschicht im Formhohlraum vermieden werden können und trotzdem ein sicherer Verschluss bis hin zur Freigabe der Angussöffnung der weiteren Düse ermöglicht wird.

Vorteilhaft ist auch eine Verfahrensvariante gemäss Anspruch 5, weil dadurch Vermischungen von unterschiedlichen Werkstoffen während dem Herstellvorgang der Trägerschicht vermieden werden können. Gleichzeitig wird dadurch aber auch ein Verstopfen der Angussöffnung der weiteren Düse bis hin zu deren Freigabe verhindert.

Vorteilhaft ist bei den gewählten Verfahrensschritten nach Anspruch 6, dass so die Möglichkeit geschaffen wird, die hergestellte Trägerschicht im Bereich der Formhälfte zu belassen und in einem nachfolgenden Arbeitsvorgang durch diesen Durchbruch hindurch einen Zugang zu dem zwischen den Schichten gebildeten Hohlraum bzw. den Hohlräumen für die Einbringung des Werkstoffes zur Bildung der Zwischenschicht zu haben.

Weiters ist ein Vorgehen gemäss den im Anspruch 7 angegebenen Merkmalen vorteilhaft, weil so bereits für den abschliessenden Endfertigungsvorgang eine in ihrer Raumform festgelegte Dekorschicht zur Verfügung steht.

Eine weitere vorteilhafte Vorgehensweise ist im Anspruch 8 beschrieben, wodurch die Möglichkeit geschaffen wird, auf engstem Raum exakt aufeinander abstimmbare Einzelkomponenten, nämlich die Trägerschicht und die Dekorschicht, getrennt voneinander herzustellen und unmittelbar nach deren Formgebungsvorgang daraus den endgültigen Formteil herstellen zu können.

Vorteilhaft ist auch eine Verfahrensvariante gemäss Anspruch 9, weil dadurch nach der Herstellung der einzelnen Schichten diese zur endgültigen Fertigstellung des gewünschten Formteils zum Einbringen des Werkstoffs zur Bildung der Zwischenschicht bereit in ihrer vorbestimmten Endlage im Formhohlraum angeordnet sind.

Vorteilhaft ist bei den gewählten Verfahrensschritten nach Anspruch 10, dass so auch während dem Ausbilden der Zwischenschicht eine relative Positionierung der Dekorschicht und/oder der Trägerschicht zueinander ermöglicht wird.

Weiters ist ein Vorgehen gemäss den im Anspruch 11 angegebenen Merkmalen vorteilhaft, weil dadurch im Anschluss an die gleichzeitige Herstellung der Dekorschicht und der Trägerschicht mittels einer einfachen Umsetzbewegung die beiden Schichten in den gemeinsamen Hohlraum verbracht werden können. Dadurch fallen keine weiteren Handling-Tätigkeiten für die Dekorschicht sowie die Trägerschicht an und können so bis zur endgültigen Herstellung des Formteils in den entsprechend dafür vorgesehenen Formhälften verbleiben.

Eine weitere vorteilhafte Vorgehensweise ist im Anspruch 12 beschrieben, wodurch mit einer reinen Schiebebewegung das Auslagen gefunden werden kann und so mit relativ geringem Aufwand ein exaktes Ausbilden des endgültigen Formteils ermöglicht wird.

Vorteilhaft ist auch eine Verfahrensvariante gemäss Anspruch 13, weil dadurch es auf einfache Weise ermöglicht wird, die Elastizität bzw. Rückfederungskraft abschnittsweise an die jeweilig gewünschten Anforderungen anpassen zu können. Weiters können dadurch auch sanfte Übergänge von härter gestalteten Abschnitten des Formteils hin zu eine höhere Elastizität bzw. Weichheit aufweisenden Abschnitten gestaltet werden. Damit können auch Zonen mit unterschiedlichen Härten und/oder elastischen Eigenschaften geschaffen werden.

Eine weitere vorteilhafte Vorgehensweise ist im Anspruch 14 beschrieben, wodurch über die gesamte Flächenausdehnung der einander zugewendeten Oberflächen der Trägerschicht sowie der Dekorschicht eine einfach herzustellende Verbindung und damit verbundenen Anhaftung zwischen diesen Schichten hergestellt werden kann. Damit fallen zusätzliche Verbindungsvorgänge, wie z.B. Kleben, weg und es kann nach der Ausbildung der Zwischenschicht ein in seiner Form zusammenhaltender Bauteil aus dem Formwerkzeug entnommen werden.

Vorteilhaft ist bei den gewählten Verfahrensschritten nach Anspruch 15, dass so Zuschneidevorgänge vermieden werden können und trotzdem ein Ausfüllen des oder der Hohlräume zwischen den beiden Schichten durchführbar ist. Dadurch kann der oder die Hohlräume einfach und vollständig mit dem Werkstoff zur Bildung der Zwischenschicht aufgefüllt werden.

Weiters ist ein Vorgehen gemäss den im Anspruch 16 angegebenen Merkmalen vorteilhaft, weil es so vermieden werden kann, dass der zur Bildung der Zwischenschicht eingebrachte Werkstoff direkt mit Formwänden des Formhohlraums in Verbindung kommt. Dadurch kann auf Trennmittel bei einzelnen verwendeten Werkstoffen verzichtet werden. Darüber hinaus fallen auch geringere Reinigungstätigkeiten an, wodurch eine höhere Standzeit des Werkzeuges bis hin zur nächsten Standardinspektion erreicht wird.

Eine weitere vorteilhafte Vorgehensweise ist im Anspruch 17 beschrieben, wodurch einfach auf unterschiedliche Anforderungen Rücksicht genommen werden kann.

Vorteilhaft ist auch eine Verfahrensvariante gemäss Anspruch 18, weil dadurch das Aussehen und das Erscheinungsbild des gesamten Formteils einfach verändert werden kann.

Schliesslich ist aber auch ein Vorgehen, wie im Anspruch 19 beschrieben möglich, da so komplizierte Zuschneidevorgänge für die Zwischenschicht wegfallen und ein vollständiges Ausfüllen des zur Aufnahme der Zwischenschicht vorgesehenen Hohlraums zwischen den Schichten erzielt wird.

Zum besseren Verständnis der Erfindung wird diese anhand der nachfolgenden Figuren näher erläutert.

Es zeigen jeweils in stark schematisch vereinfachter Darstellung:
- Fig. 1: einen Querschnitt eines erfindungsgemäss hergestellten Formteils mit bereichsweise schemenhaft angedeutetem Formwerkzeug;
- Fig. 2: einen Teilbereich des Formwerkzeuges zur Herstellung der Tragschicht des Formteils;
- Fig. 3: einen weiteren Teilbereich des Formwerkzeuges zur Herstellung der Dekorschicht des Formteils;
- Fig. 4: das Formwerkzeug in der geöffneten Stellung vor dem Beginn des Herstellungsvorganges des Formteils;
- Fig. 5: das Formwerkzeug nach Fig. 4 in der geschlossenen ersten Stellung zur gleichzeitigen Ausbildung der Dekorschicht und der Trägerschicht;
- Fig. 6: das Formwerkzeug nach Fig. 4 und 5 in einer erneuten Öffnungsstellung und ausgebildeter Dekorschicht und Trägerschicht;
- Fig. 7: das Formwerkzeug nach den Fig. 4 bis 6, jedoch mit versetzt angeordnetem Werkzeugelement;
- Fig. 8: das Formwerkzeug nach den Fig. 4 bis 7 in einer weiteren geschlossenen Stellung zur Ausbildung der Zwischenschicht;
- Fig. 9: das Formwerkzeug nach den Fig. 4 bis 8, in einer erneuten Öffnungsstellung zur Entnahme des hergestellten Formteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäss auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemässe Lösungen darstellen.

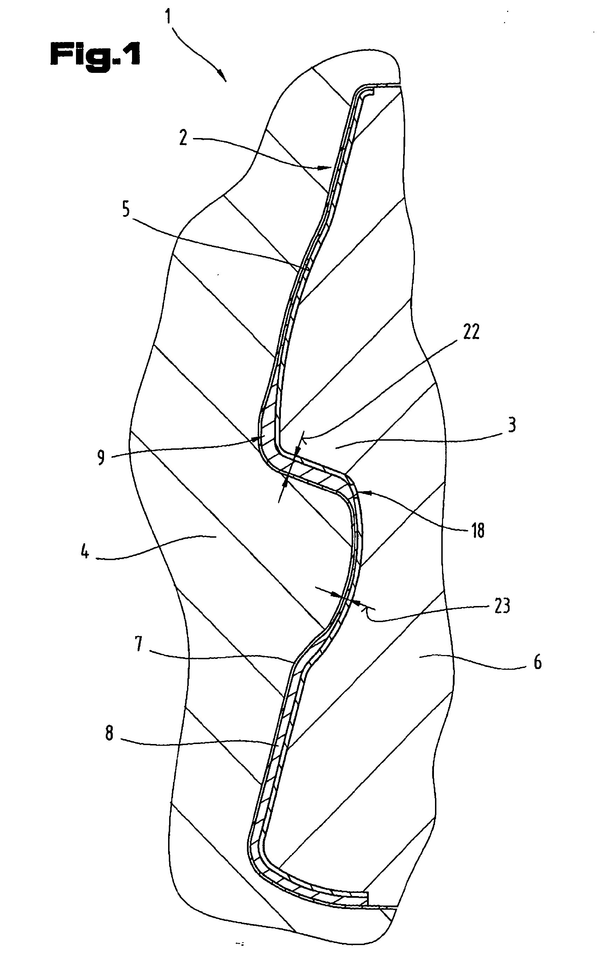

In den Fig. 1 bis 9 ist vereinfacht ein Formwerkzeug 1 zur Herstellung eines insbesondere mehrlagigen Formteils 2 gezeigt. Dieser mehrlagige Formteil 2 wird insbesondere als Verkleidungsteil für Kraftfahrzeuge als Innenverkleidung eingesetzt. Dabei soll der Werkzeugaufbau des Formwerkzeuges 1 vereinfacht sowie der spätere Herstellungsvorgang wesentlich kostengünstiger und in seiner Handhabung einfacher gestaltet werden.

Wie nun am besten aus der Fig. 1 zu ersehen ist, kann das Formwerkzeug 1 zumindest einen Stempelteil 3 sowie zumindest einen Matrizenteil 4 umfassen. Zwischen dem Stempelteil 3 und dem Matrizenteil 4 bildet sich bei geschlossenem Formwerkzeug 1 ein Formhohlraum 5 aus, welcher durch entsprechende Formwände bzw. Formflächen des Stempel- bzw. Matrizenteils 3, 4 in seiner Raumform festgelegt ist.

Das herzustellende Formteil 2 weist einen mehrlagigen Schichtaufbau auf. Bevorzugt umfasst das Formteil 2 zumindest eine Trägerschicht 6, zumindest eine Dekorschicht 7 sowie eine zumindest bereichsweise zwischen der Trägerschicht 6 und der Dekorschicht 7 angeordnete Zwischenschicht 8.

Für den Herstellungsvorgang des Formteils 2 wird sowohl die Trägerschicht 6 als auch die Dekorschicht 7 im Formhohlraum 5 angeordnet und zwischen diesen an jenen vorbestimmten Stellen, an welchen die Zwischenschicht 8 ausgebildet werden soll, ein Hohlraum 9 vorgesehen bzw. ausgebildet. Durch die Anordnung der Trägerschicht 6 sowie der Dekorschicht 7 im Bereich der Formwände des Formwerkzeuges 1 und dem zumindest bereichsweise dazwischen ausgebildeten Hohlraum 9 bzw. der Hohlräume 9, erfolgt während dem Einbringen bzw. Ausbilden der Zwischenschicht 8 kein Kontakt des dafür vorgesehenen Werkstoffes mit den Formwänden des Formwerkzeuges 1, wodurch auf entsprechende Trennmittel bzw. zusätzliche Reinigungsvorgänge verzichtet werden kann. Dadurch können grössere Wartungsintervalle erzielt werden und gewisse Standardwartungen fallen in einem grösseren Zeitintervall an, wodurch eine höhere Produktivität des Formwerkzeuges 1 erzielt wird. Das Einbringen bzw. Ausbilden der Zwischenschicht 8 wird nachfolgend noch detailliert beschrieben werden.

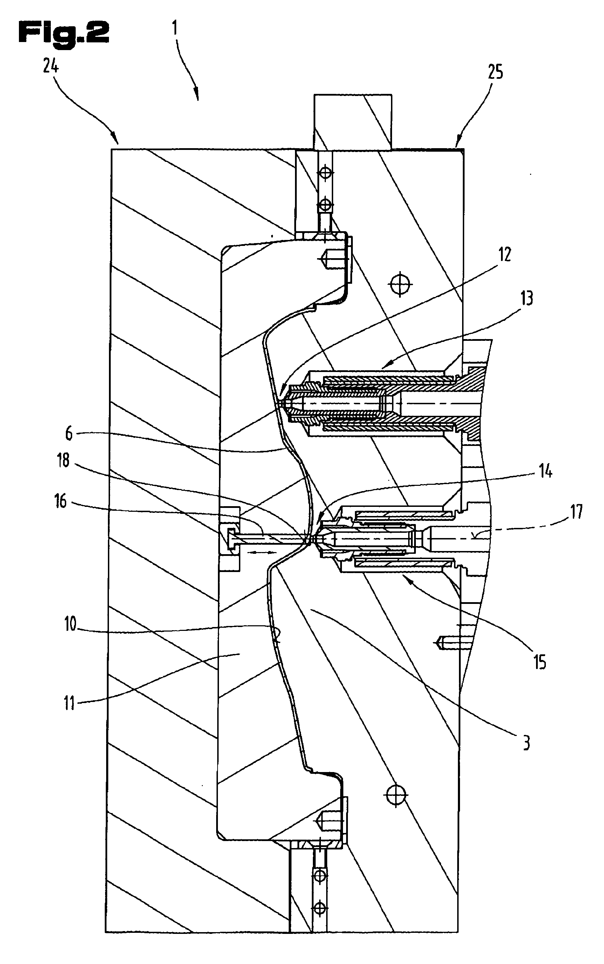

Wie nun besser aus der Fig. 2 zu ersehen ist, kann das Formwerkzeug 1 zur Ausbildung der Trägerschicht 6 einen eigenen, weiteren Formhohlraum 10 aufweisen. Dieser Formhohlraum 10 kann durch das zuvor beschriebene Stempelteil 3 bzw. aber auch durch einen unabhängig davon angeordneten weiteren Stempelteil sowie einen weiteren Matrizenteil 11 umgrenzt sein. In der geschlossenen Stellung des Formhohlraums 10 mündet über eine erste Angussöffnung 12 eine erste Düse 13 in den Formhohlraum 10 zur Ausbildung der Trägerschicht 6 ein. Die Herstellung der Trägerschicht 6 erfolgt hier durch einen Spritzgussvorgang in bekannter Weise. Es wäre unabhängig davon aber auch möglich, eine auf andere Weise hergestellte Trägerschicht 6 auszubilden und diese dann gemeinsam mit der Dekorschicht 7 für die Ausbildung der Zwischenschicht 8 im Formhohlraum 5 anzuordnen.

Weiters ist in der Fig. 2 noch gezeigt, dass in den gleichen Formhohlraum 10 bzw. später in den gemeinsamen Hohlraum 5, eine zweite bzw. weitere Angussöffnung 14 einer zweiten bzw. weiteren Düse 15 einmündet, welche zur Herstellung bzw. Ausbildung der später einzubringenden Zwischenschicht 8 dient. Um ein Verschliessen der Angussöffnung 14 während dem Herstellungsvorgang der Trägerschicht 6 mit deren Werkstoff zu vermeiden, ist es vorteilhaft, wenn diese weitere Angussöffnung 14 mittels eines den Formhohlraum 10 durchsetzenden Stellelements 16 bedarfsweise verschliessbar ist. Das oder die Stellelemente 16 können dabei aber auch als Schieberelemente bzw. Schliesselemente bezeichnet werden. Dabei ist das Stellelement 16 bevorzugt stiftförmig ausgebildet und zusätzlich noch bei diesem hier dargestellten Ausführungsbeispiel in axialer Ausrichtung bezüglich einer Düsenachse 17 der Düse 15 im Matrizenteil 11 in Richtung der Düsenachse 17 verstellbar gelagert bzw. geführt. Es wäre aber auch eine dazu andere Ausrichtung des Stellelements 16 als die zuvor beschriebene möglich. Das Verschliessen der weiteren Angussöffnung 14 kann dabei auch in winkeliger Ausrichtung bezüglich der Düsenachse 17 erfolgen, wobei z.B. eine lotrechte Ausrichtung dazu denkbar wäre. Dies kann dann der Fall sein, wenn eine Umsetzung des Matrizenteils 11 nicht günstig oder nicht möglich ist. Damit ist das Stellelement 16 auf der von der weiteren Düse 15 gegenüberliegenden Seite des Formhohkaums 10 angeordnet. Vor dem Beginn des Herstellungsvorganges der Trägerschicht 6 wird das Stellelement 16 hin zur weiteren Angussöffnung 14 bewegt und deren Mündungsöffnung durch das Stellelement 16 dicht verschlossen. Da das Stellelement 16 von der gegenüberliegenden Seite hin auf die weitere Düse 15 ragt, wird auch in diesem Bereich der Formhohlraum 10 vom Stellelement 16 durchragt bzw. durchsetzt. Damit entsteht während der Ausbildung der Trägerschicht 6 innerhalb dieser ein Durchbruch 18. Dieser Durchbruch 18 ist vereinfacht auch noch in der Fig. 1 dargestellt und dient zum späteren Einbringen des Werkstoffs zur Bildung der Zwischenschicht 8 zwischen der Trägerschicht 6 und der Dekorschicht 7.

Sind mehrere voneinander unabhängige Hohlräume 9 vorgesehen, kann jedem dieser eine eigene weitere Düse 15 sowie das Stellelement 16 zugeordnet werden. Ist eine vollflächige Einbringung der Zwischenschicht 8 erwünscht, wird ein zusammenhängender Hohlraum 9 mit bevorzugt unterschiedlicher Dicke bzw. Stärke zwischen den beiden Schichten 6, 7 ausgebildet.

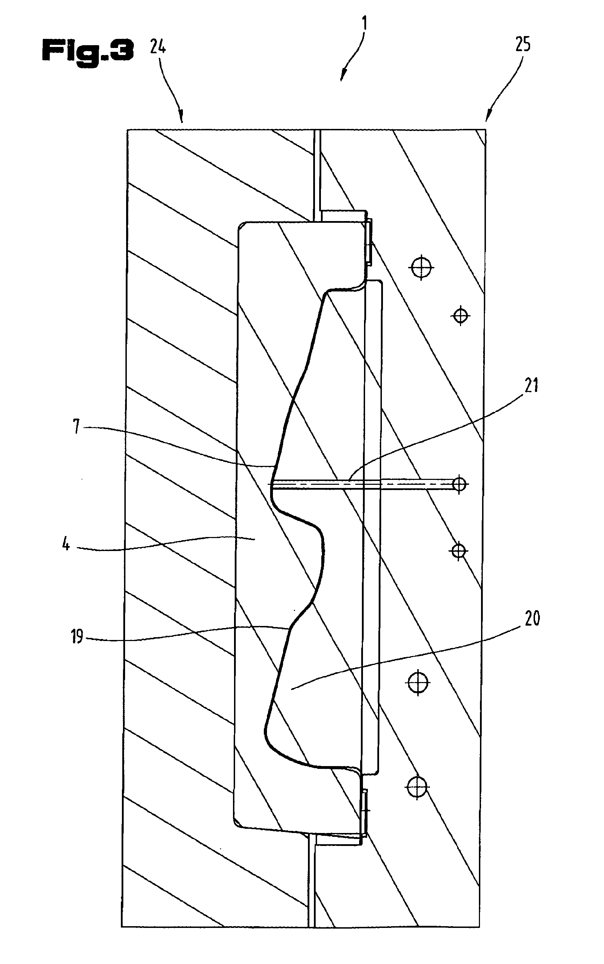

In der Fig. 3 ist vereinfacht die Formgebung der Dekorschicht 7 dargestellt, wobei dies beispielsweise im gleichen Formwerkzeug 1, jedoch in einem eigenen Formhohlraum 19 zwischen dem Matrizenteil 4 und einem Stempelteil 20 erfolgen kann.

Die Dekorschicht 7 kann ihrerseits aus einem organischen und/oder metallischen Werkstoff gebildet werden. Aus diesen Werkstoffen werden bevorzugt zumeist bleibend, insbesondere thermisch verformbare Folien oder aber auch entsprechend ausgerüstete Dekorstoffe, Gewebe, Gewirke, Gestricke oder Vliese gebildet. Dabei können natürliche und/oder künstliche Fäden bzw. Fasern zum Einsatz kommen. Es wäre aber auch jede beliebige Kombination der unterschiedlichen Werkstoffe untereinander sowie der daraus gebildeten Ausgangsmaterialien denkbar. Zur leichteren Formgebung der Dekorschicht 7 kann in den Formhohlraum 19 zumindest eine Absaugleitung 21 einmünden, welche mit einem hier nicht näher dargestellten Unterdruckerzeuger bzw. einer Absaugpumpe in Verbindung steht. Dadurch kann beim Schliessen des Formhohlraums 19 noch vorhandene Luft abgesaugt und die zu verformende Dekorschicht 7 an die Formwände des Matrizenteils 4 bzw. Stempelteils 20 angelegt, insbesondere angesaugt werden. Durch diesen Vorgang wird die Dekorschicht 7 im Formhohlraum 19 auf die vorbestimmte Raumform umgeformt. Dies kann durch einen thermischen Umformvorgang erfolgen. Bevorzugt wird jedoch die Herstellung der Trägerschicht 6 sowie die Umformung der Dekorschicht 7 in einem gemeinsamen Formwerkzeug 1 gleichzeitig durchgeführt, wobei jedoch dies in räumlich voneinander getrennten ersten und zweiten Formhohlräumen 10, 19 durchgeführt wird. In entsprechenden Schemaskizzen wird dies nachfolgend noch detailliert erläutert werden.

Anschliessend an die Formgebung der Dekorschicht 7 sowie der Herstellung der Trägerschicht 6 werden diese in dem gemeinsamen Formhohlraum 5 angeordnet, wie dies in der Fig. 1 dargestellt ist. Dabei wird der gemeinsame Formhohlraum 5 bei diesem hier gezeigten Ausführungsbeispiel einerseits durch das Stempelteil 3 zur Herstellung bzw. Ausbildung der Trägerschicht 6 und andererseits durch das Matrizenteil 4 zur Herstellung bzw. Vorformung der Dekorschicht 7 gebildet. Dies erfolgt durch entsprechende Versetzung der Stempel- bzw. Matrizenteile gegeneinander.

Sind die Trägerschicht 6 sowie die Dekorschicht 7 im gemeinsamen Formhohlraum 5 angeordnet, ist es vorteilhaft, wenn diese dort auch positioniert gehalten werden.

Wie nun besser aus der Fig. 1 zu ersehen ist, kann der zwischen der Dekorschicht 7 und der Trägerschicht 6 angeordnete bzw. ausgebildete Hohlraum 9 zur Aufnahme bzw. Ausbildung der Zwischenschicht 8 mit einer über dessen Flächenausdehnung gesehen unterschiedlichen Stärke 22, 23 und/oder Flächenausdehnung ausgebildet werden. Dadurch wird es möglich, an vordefinierten Stellen eine unterschiedliche Elastizität bzw. Nachgiebigkeit und damit verbundene Weichheit des Formteils 2 an den dafür vorbestimmten Stellen zu erzielen. Durch eine unterschiedliche Wahl der Werkstoffe zur Bildung der Zwischenschicht 8 sowie der Anordnung derselben am herzustellenden Formteil 2 ist es möglich, das Formteil 2 individuell an unterschiedlichste Einsatzbedingungen anpassen zu können. Werden weiche und elastisch verformbare Abschnitte gewünscht, können zwischen den beiden Schichten 7, 8 auch Gase, Flüssigkeiten, Gele oder ähnliches eingebracht werden. Dabei ist auf eine entsprechende Dichtheit der beiden Schichten 7, 8 in Bezug auf Gas- und/oder Flüssigkeitsdichtheit zu achten. Damit lässt sich ein so genannter "Pad-Effekt" erzielen.

Bevorzugt wird die Zwischenschicht 8 ebenfalls durch einen eigenen Einspritzvorgang im Hohlraum 9 ausgebildet, wobei dies am besten aus der Fig. 2 zu ersehen ist. Dies erfolgt mittels der zweiten Düse 15 und die mit dem Formhohlraum 5 über den Durchbruch 18 in Verbindung stehende Angussöffnung 14.

Werden in einem Arbeitsgang, wie dies bereits zuvor beschrieben, sowohl die Trägerschicht 6 als auch die Dekorschicht 7 gleichzeitig hergestellt bzw. umgeformt, kann nach dem Öffnen des Formwerkzeuges 1 die am Stempelteil 3 befindliche Trägerschicht 6 ortsfest verbleiben und beispielsweise die im Matrizenteil 4 vorgeformte Dekorschicht 7 mittels einer Umsetzbewegung zum Stempelteil 3 hinbewegt werden. Nach dem Schliessen des Formwerkzeuges 1 in dieser Stellung, wird der gemeinsame Formhohlraum 5 definiert und nachfolgend kann mit dem Ausbilden bzw. Einbringen des Werkstoffs zur Bildung der Zwischenschicht 8 begonnen werden. Dieses Einbringen bzw. Ausbilden der Zwischenschicht 8 kann ebenfalls bevorzugt durch einen Einspritzvorgang durchgeführt werden. Dies ist dadurch möglich, dass die zweite Düse 15 über den oder die in der Trägerschicht 6 angeordneten Durchbrüche 18 mit dem Hohlraum 9 in Strömungsverbindung steht.

Bevorzugt kann die Trägerschicht 6 aus einem bevorzugt thermoplastischen Werkstoff aus der Gruppe von Polypropylen (PP), Polyethylen (PE), Polyamid (PA), Acrylnitril-Butadien-Styrol (ABS), Polycarbonat - Acrylnitril-Butadien-Styrol Blend (PC-ABS Blend) gewählt werden.

Das die Zwischenschicht 8 bildende Material kann aus einem insbesondere schäumbaren und/oder aufquellbaren Kunststoffmaterial, wie beispielsweise einem Kunststoffschaum gebildet sein, wobei dieser aus der Gruppe von Polyurethan (PU), einem thermoplastischen Elastomer (TPE) gewählt wird. Unter dem Begriff "schäumbar" bzw. "aufquellbar" wird dabei verstanden, dass sich das Volumen des in den Hohlraum 9 eingebrachten Werkstoffes vergrössert bzw. sich dieses in seiner Porosität verdichtet. Es wäre aber auch ein Polymerer Werkstoff möglich, der sowohl in geschäumtem oder nichtgeschäumtem Zustand zur Anwendung kommen kann. Wird ein Kunststoffschaum gewählt, wird dieser in fliessfähigem Zustand in den Hohlraum 9 eingebracht und kann dort entsprechend aufschäumen, bis dieser seinen verfestigten Zustand erreicht hat. Über die Zwischenschicht 8 erfolgt bevorzugt auch die Verbindung zwischen der Trägerschicht 6 und der Dekorschicht 7, wobei dies von den die Zwischenschicht 8 bildenden Werkstoffen bzw. deren Kombination abhängt. Zumeist werden elastisch verformbare Werkstoffe für die Zwischenschicht 8 eingesetzt, wobei aber auch eine beliebige Kombination derselben in unterschiedlichen Abschnitte bzw. Hohlräumen 9 erfolgen kann. Diese Werkstoffe können ausgehend von einem sehr geringen Elastizitätsmodul bis hin zu einem hohen Elastizitätsmodul ausgewählt sein. Werden z.B. inelastisch bleibend verformbare Werkstoffe für die Zwischenschicht 8 eingesetzt, bieten diese einen wirksamen Aufprallschutz zur Umwandlung kinetischer Energie bei einem Unfall. Je geringer der E-Modul ist, desto elastischer und weicher kann die Zwischenschicht 8 gestaltet werden. Dies kann z.B. bei einer Armlehne einen weicheren Abstützbereich darstellen.

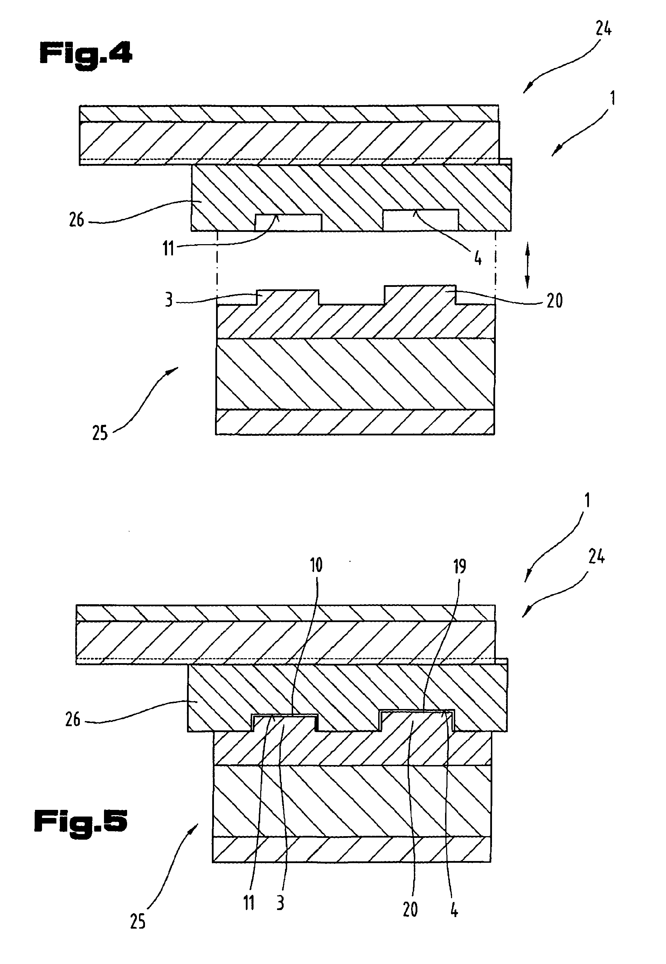

In den Fig. 4 bis 9 ist vereinfacht das Formwerkzeug 1 zur Herstellung des Formteils 2 in den unterschiedlichen hintereinander abfolgenden Arbeitsschritten stark vereinfacht schematisch dargestellt. Dies ist nur ein Beispiel für eine Vielzahl von anderen Möglichkeiten, wobei am Ende der Beschreibung dann noch eine weitere Möglichkeit kurz angedeutet wird.

So ist in der Fig. 4 das Formwerkzeug 1 in der geöffneten Stellung seiner Formhälften 24, 2S gezeigt. Der Einfachheit halber wird hier für die nachfolgende Beschreibung die oben angeordnete Formhälfte 24 als obere Formhälfte und die unterhalb angeordnete Formhälfte 25 als untere Formhälfte bezeichnet. Dabei sei erwähnt, dass sowohl das Formwerkzeug 1 bzw. die dieses bildenden Formhälften 24, 25 nur stark vereinfacht und symbolisch dargestellt sind und auf jegliche Details der besseren Übersichtlichkeit halber verzichtet worden ist. Dabei ist aber auch jede andere beliebige Lageausrichtung der beiden Formhälften 24, 25 zueinander möglich.

In der Fig. 4 ist das Formwerkzeug 1 in seiner geöffneten Stellung und somit den voneinander getrennten Formhälften 24, 25 dargestellt. Bei diesem hier gezeigten Formwerkzeug 1 werden in einem Arbeitsgang nach dem Schliessen der Formhälften 24, 25 einerseits die Trägerschicht 6 und andererseits die Dekorschicht 7 gleichzeitig ausgebildet bzw. vorgeformt. Zur Verformung bzw. Bildung der Dekorschicht 7 ist im Bereich der oberen Formhälfte 24 das Matrizenteil 4 und im Bereich der unteren Formhälfte 25 das Stempelteil 20 vorgesehen. Diese sind im rechten Teil des Formwerkzeuges 1 vereinfacht dargestellt. Zur Bildung der Trägerschicht 6 ist in der oberen Formhälfte 24 das Matrizenteil 11 und in der unteren Formhälfte 25 das Stempelteil 3 vorgesehen, wobei diese im linken Teil des Formwerkzeuges 1 dargestellt sind. Die beiden Formhälften 24, 25 sind prinzipiell ortsfest und relativ zueinander feststehend angeordnet, wobei bei diesem Ausführungsbeispiel noch im Bereich der oberen Formhälfte 24 die beiden Matrizenteile 4, 11 in einem eigenen verlagerbar ausgebildeten Werkzeugteil 26 angeordnet bzw. ausgebildet sind. Bevorzugt ist dieses Werkzeugteil 26 Bestandteil der ansonst ausser dem Öffnungsvorgang feststehenden oberen Formhälfte 24 und ist bevorzugt längsverschieblich bezüglich diesem daran angeordnet bzw. geführt gelagert.

In der Fig. 5 ist das Formwerkzeug 1 mit geschlossenen Formhälften 24, 25 dargestellt, wobei im Bereich zwischen dem Matrizenteil 4 und dem Stempelteil 20 der Formhohlraum 19 zur Formgebung der Dekorschicht 7 ausgebildet wird. Zur Festlegung und Ausbildung der Raumform der Trägerschicht 6 umgrenzen das Matrizenteil 11 und das Stempelteil 3 den Formhohlraum 10. In dieser geschlossenen Werkzeugstellung erfolgt die gleichzeitige Ausbildung und Herstellung der beiden Schichten 6, 7.

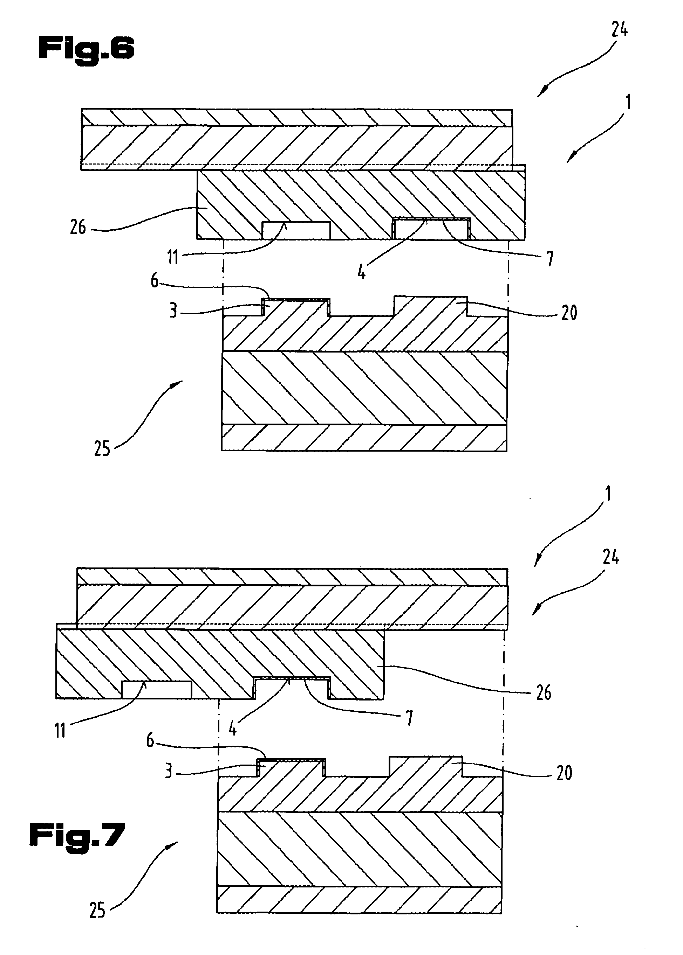

In der Fig. 6 ist nach dem gemeinsamen Herstellungsvorgang das Formwerkzeug 1 wieder in einer geöffneten Stellung gezeigt, wobei das Werkzeugteil 26 mit seinem darin angeordneten Matrizenteil 4 die dort vorgeformte Dekorschicht 7 aufnimmt bzw. haltert. Die Trägerschicht 6 hingegen verbleibt hier ortsfest am Stempelteil 3.

In der Fig. 7 ist das Formwerkzeug 1 nochmals in seiner geöffneten Werkzeugstellung dargestellt, wobei im Gegensatz zur Fig. 6 das Werkzeugteil 26 mit der im Matrizenteil 4 gehalterten Dekorschicht 7 versetzt dargestellt ist, sodass das Matrizenteil 4 nun in seiner Lage korrespondierend zum Stempelteil 3 und der darauf angeordneten Trägerschicht 6 angeordnet bzw. ausgerichtet ist.

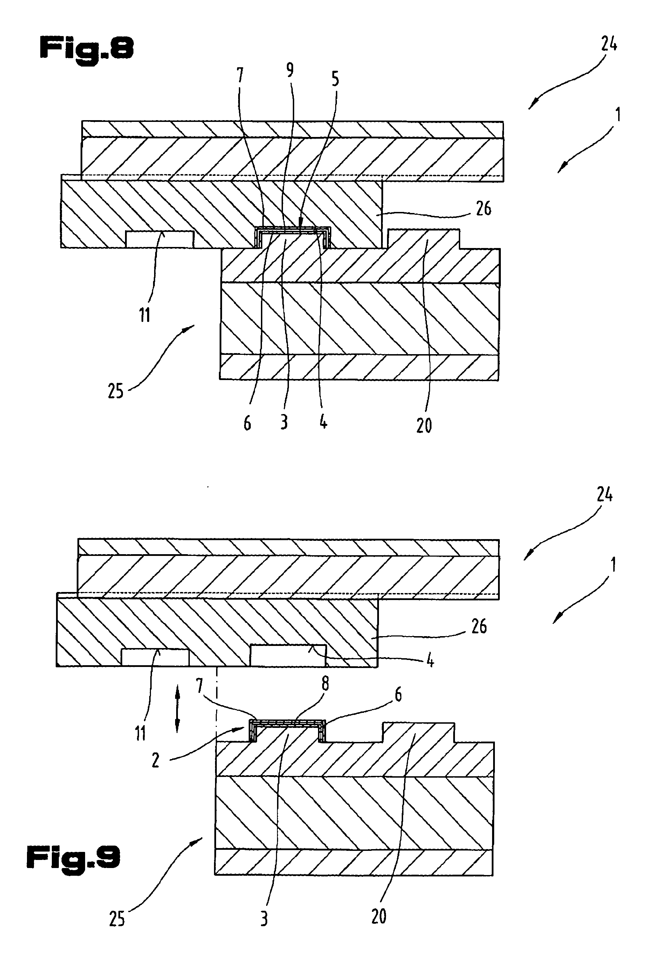

In dieser Stellung wird das Formwerkzeug 1 erneut geschlossen, wie dies in der Fig. 8 dargestellt ist. So bilden das Matrizenteil 4 mit der darin aufgenommenen Dekorschicht 7 sowie das Stempelteil 3 mit der daran angeordneten Trägerschicht 6 den gemeinsamen Formhohlraum 5 aus. Diese Situation ist auch in der Fig. 1 vereinfacht dargestellt. Dabei wird, wie bereits zuvor beschrieben, zwischen der Dekorschicht 7 und der Trägerschicht 6 zumindest ein Hohlraum 9 ausgebildet, in welchem zumindest bereichsweise die Zwischenschicht 8 ausgebildet bzw. eingebracht wird.

In der Fig. 9 ist schliesslich das Formwerkzeug 1 nach der Herstellung des gesamten Formteils 2 gezeigt, wobei dieser in der erneut geöffneten Stellung aus dem gemeinsamen Formhohlraum 5 entnommen werden kann.

Nach der Entnahme des hergestellten Formteils 2 wird das Werkzeugteil 26 wiederum in die Fig. 4 dargestellte Lage zurückverstellt und es kann ein erneuter Herstellvorgang des Formteils 2 erfolgen.

Das zuvor beschriebene gegenseitige Versetzen von Matrizenteil 4 und Stempelteil 3 kann aber auch in jeder beliebigen anderen Reihenfolge sowie auch umgekehrt erfolgen. Es wäre aber auch möglich, die Trägerschicht 6 und die Dekorschicht 7 jeweils in eigenen unabhängig voneinander ausgebildeten Formwerkzeugen herzustellen und anschliessend entweder in ein weiteres gemeinsames Formwerkzeug zu verbringen und dort die Zwischenschicht 8 auszubilden oder nur entsprechende Formhälften zu einem gemeinsamen Formhohlraum 5 zusammenzufügen.

Wie zuvor bereits kurz angedeutet, bestünde auch die Möglichkeit, die einzelnen Formen bzw. Formnester zur Bildung des Formteils 2 auf einem hier nicht näher dargestellten Rund- bzw. Drehtisch anzuordnen und die entsprechenden weiteren Stationen rund um den Rundtisch vorzusehen. So kann dann in einer ersten Station die zu verformende Dekorschicht 7 eingelegt werden. In einer nachfolgenden zweiten Station wird dann die Formgebung durchgeführt. Anschliessend daran oder aber auch gleichzeitig mit der Formgebung der Dekorschicht 7 kann die Trägerschicht 6 ausgebildet werden. So kann die Trägerschicht 6 entweder direkt an die Dekorschicht 7 angeformt oder aber auch parallel in einer eigenen Form hergestellt werden und dann nachfolgend in den gemeinsamen Formhohlraum 5 mit der Dekorschicht 7 verbracht werden. In einem nachfolgenden Arbeitsgang erfolgt dann die Herstellung und Ausbildung der Zwischenschicht 8, wie dies bereits zuvor beschrieben worden ist. Dann liegt wieder ein kompletter Formteil 2 vor und kann aus dem Rundtisch entnommen werden. Durch die Verwendung des Rundtisches erfolgt bei jedem Arbeitstakt am Anfang der Herstellungsvorganges ein Neubeginn, wodurch in einem kontinuierlichen Prozess so die Produktivität der gesamten Anlage erhöht werden kann.

Die Ausführungsbeispiele zeigen mögliche Ausführungsvarianten des Formwerkzeuges 1 bzw. des damit hergestellten Formteils 2, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschliessend darauf hingewiesen, dass zum besseren Verständnis des Aufbaus des Formwerkzeuges 1 bzw. des damit hergestellten Formteils 2 dieses bzw. dessen Bestandteile teilweise unmassstäblich und/oder vergrössert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4 bis 9 gezeigten Ausführungen den Gegenstand von eigenständigen, erfindungsgemässen Lösungen bilden. Die diesbezüglichen, erfindungsgemässen Aufgaben und Lösungen sind den Detailbeschreibungen dieser Figuren zu entnehmen.

### Bezugszeichenaufstellung

- 1: Formwerkzeug
- 2: Formteil
- 3: Stempelteil
- 4: Matrizenteil
- 5: Formhohlraum
- 6: Trägerschicht
- 7: Dekorschicht
- 8: Zwischenschicht
- 9: Hohlraum
- 10: Formhohlraum
- 11: Matrizenteil
- 12: Angussöffnung
- 13: Düse
- 14: Angussöffnung
- 15: Düse
- 16: Stellelement
- 17: Düsenachse
- 18: Durchbruch
- 19: Formhohlraum
- 20: Stempelteil
- 21: Absaugleitung
- 22: Stärke
- 23: Stärke
- 24: Formhälfte
- 25: Formhälfte
- 26: Werkzeugteil

## Patentansprüche

1. Verfahren zur Herstellung eines mehrlagigen Formteils (2), insbesondere eines Verkleidungsteils für ein Kraftfahrzeug, bei dem zwischen einer Trägerschicht (6) und einer Dekorschicht (7) zumindest bereichsweise eine Zwischenschicht (8) ausgebildet wird, **dadurch gekennzeichnet, dass** die Trägerschicht (6) und die Dekorschicht (7) in einem Formhohlraum (5) eines Formwerkzeuges (1) angeordnet werden, wobei zumindest bereichsweise zwischen der Trägerschicht (6) und der Dekorschicht (7) zumindest ein Hohlraum (9) ausgebildet wird und anschliessend im Hohlraum (9) die Zwischenschicht (8) ausgebildet wird.

2. Verfahren nach Anspruch 1, **dadurch gekennzeichnet, dass** in einem ersten Fornihohlraum (10) des Formwerkzeuges (1) die Trägerschicht (6) durch einen Spritzgussvorgang mittels einer in den Formhohlraum (10) mündenden und eine erste Angussöffnung (12) aufweisende erste Düse (13) hergestellt wird.

3. Verfahren nach Anspruch 1 oder 2, **dadurch gekennzeichnet, dass** in den ersten Formhohlraum (10) eine weitere Angussöffnung (14) einer weiteren Düse (15) einmündet, wobei die weitere Angussöffnung (14) mittels eines den ersten Formhohlraum (10) durchsetzenden stiftförmigen Stellelements (16) bedarfsweise verschliessbar ausgebildet ist.

4. Verfahren nach Anspruch 3, **dadurch gekennzeichnet, dass** das stiftförmige Stellelement (16) bezüglich der weiteren Düse (15) axial verstellbar auf der von der weiteren Düse (15) gegenüberliegenden Seite des Formhohlraums (10) geführt gelagert wird.

5. Verfahren nach Anspruch 3 oder 4, **dadurch gekennzeichnet, dass** während dem Spritzgussvorgang zur Herstellung der Trägerschicht (6) die weitere Angussöffnung (14) der weiteren Düse (15) vom stiftförmigen Stellelement (16) verschlossen wird.

6. Verfahren nach einem der Ansprüche 3 bis 5, **dadurch gekennzeichnet, dass** durch das den ersten Formhohlraum (10) durchsetzende stiftförmige Stellelement (16) in der Trägerschicht (6) ein Durchbruch (18) ausgebildet wird.

7. Verfahren nach einem der vorhergehenden Ansprüche, **dadurch gekennzeichnet, dass** die Dekorschicht (7) in einem weiteren Formhohlraum (19) auf die vorbestimmte Raumform umgeformt wird.

8. Verfahren nach einem der vorhergehenden Ansprüche, **dadurch gekennzeichnet, dass** die Herstellung der Trägerschicht (6) und die Umformung der Dekorschicht (7) in einem gemeinsamen Formwerkzeug (1) in den voneinander räumlich getrennten ersten und zweiten Formhohlräumen (10, 19) gleichzeitig durchgeführt wird.

9. Verfahren nach einem der vorhergehenden Ansprüche, **dadurch gekennzeichnet, dass** anschliessend an die Formgebung der Dekorschicht (7) sowie der Herstellung der Trägerschicht (6) diese in einem gemeinsamen Formhohlraum (5) angeordnet werden.

10. Verfahren nach einem der vorhergehenden Ansprüche, **dadurch gekennzeichnet, dass** die Dekorschicht (7) und/oder die Trägerschicht (6) im gemeinsamen Formhohlraum (5) positioniert gehalten werden.

11. Verfahren nach einem der vorhergehenden Ansprüche, **dadurch gekennzeichnet, dass** ein die umgeformte Dekorschicht (7) aufnehmender Matrizenteil (4) des Formwerkzeuges (1) nach dem Öffnen des Formwerkzeuges (1) zu einem die Trägerschicht (6) aufnehmenden Stempelteil (3) des Formwerkzeuges (1) hin bewegt und anschliessend das Formwerkzeug (1) wieder geschlossen wird.

12. Verfahren nach Anspruch 11, **dadurch gekennzeichnet, dass** die Umsetzbewegung bei der Verstellung des Matrizenteils (4) mittels einer Linearbewegung eines Werkzeugteils (26) des Formwerkzeugs (1) durchgeführt wird.

13. Verfahren nach einem der vorhergehenden Ansprüche, **dadurch gekennzeichnet, dass** der zwischen der Dekorschicht (7) und der Trägerschicht (6) angeordnete Hohlraum (9) mit einer über dessen Flächenausdehnung gesehen unterschiedlichen Stärke (22, 23) ausgebildet wird.

14. Verfahren nach einem der vorhergehenden Ansprüche, **dadurch gekennzeichnet, dass** der zwischen der Dekorschicht (7) und der Trägerschicht (6) angeordnete Hohlraum (9) über die gesamte Flächenausdehnung des Formteils (2) ausgebildet wird.

15. Verfahren nach einem der vorhergehenden Ansprüche, **dadurch gekennzeichnet, dass** das Ausbilden der Zwischenschicht (8) durch einen Einspritzvorgang in den Hohlraum (9) erfolgt.

16. Verfahren nach einem der vorhergehenden Ansprüche, **dadurch gekennzeichnet, dass** der Einspritzvorgang durch den in der Trägerschicht (6) angeordneten Durchbruch (18) hindurch erfolgt, welcher in den Hohlraum (9) einmündet.

17. Verfahren nach einem der vorhergehenden Ansprüche, **dadurch gekennzeichnet, dass** die Trägerschicht (6) aus einem Werkstoff aus der Gruppe von Polypropylen (PP), Polyethylen (PE), Polyamid (PA), Acrylnitril-Butadien-Styrol (ABS), Polycarbonat - Acrylnitril-Butadien-Styrol Blend (PC-ABS Blend) gewählt wird.

18. Verfahren nach einem der vorhergehenden Ansprüche, **dadurch gekennzeichnet, dass** die Dekorschicht (7) aus einem organischen und/oder metallischen Werkstoff gebildet wird.

19. Verfahren nach einem der vorhergehenden Ansprüche, **dadurch gekennzeichnet, dass** die Zwischenschicht aus einem insbesondere schäumbaren Kunststoffinaterial, insbesondere aus einem Kunststoffschaum, aus der Gruppe von Polyurethan (PU), einem thermoplastischen Elastomer (TPE) gewählt wird.
